# EUROPÄISCHE PATENTANMELDUNG

(11) **EP 3 440 914 A1**
(43) Veröffentlichungstag der Anmeldung: **13.02.2019**
(21) Anmeldenummer: 17185901.0
(22) Anmeldetag: 11.08.2017
(51) Int. Cl.: A01D 34/13

(54) **MESSERKLINGE FÜR EIN MÄHMESSER EINER LANDWIRTSCHAFTLICHEN ERNTEMASCHINE**

(71) Anmelder: SMF - Holding GmbH, 57612 Eichelhardt (DE)
(72) Erfinder: OTTO, Sascha, 57612 Racksen (DE); SCHMIDT, Ralf, 57629 Mörsbach (DE)
(74) Vertreter: Neumann Müller Oberwalleney & Partner Patentanwälte

(57) **Zusammenfassung**

Messerklinge 1 für ein Mähmesser einer landwirtschaftlichen Erntemaschine, wobei die Messerklinge 1 zumindest einen Schneidenbereich 2, 3 mit einer Mehrzahl von Schneidzähnen 4 und zwischen den Schneidzähnen 4 angeordneten Zahnzwischenräumen 5 aufweist,
wobei die Schneidzähne 4 jeweils eine vorstehende Schneide 6 mit einer Schneidkante 7 und die Zahnzwischenräume 5 jeweils eine zurückversetze Schneide 8 mit einer Schneidkante 9 bilden, und
wobei von den jeweiligen Schneidkanten 7, 9 ausgehend die Klingendicke der Messerklinge 1 zunimmt, wobei die zurückversetzen Schneiden 8 in Abstand zur jeweiligen Schneidkante 9 einen Verschleißbereich 10 reduzierter Klingendicke aufweisen.

## Beschreibung

Die Erfindung betrifft eine Messerklinge für ein Mähmesser einer landwirtschaftlichen Erntemaschine, mit einer Klingenoberseite und einer Klingenunterseite, sowie ein Verfahren zur Herstellung einer Messerklinge.

Eine Messerklinge ist zum Beispiel aus der DE 32 08 270 C2 bekannt. Die dort gezeigte Messerklinge ist dreieckig gestaltet und weist zwei Schneidenbereiche auf, die spitzwinklig zueinander verlaufen. Die beiden Schneidenbereiche weisen jeweils einseitig angeschliffene Schneiden auf, die Einkerbungen aufweisen, so dass Schneidzähne und Zahnzwischenräume gebildet sind. Die Schneidzähne laufen hierbei jeweils spitz, eine Zahnspitze bildend, zu.

Messerklingen dieser Art werden üblicherweise bei Mähwerken von landwirtschaftlichen Erntemaschinen verwendet. Eine Vielzahl von Messerklingen ist hierbei nebeneinander angeordnet auf einer Messerschiene verschraubt oder vernietet, wobei die Messerspitzen, die durch die spitz zulaufenden Schneidenbereiche gebildet sind, in Arbeitsrichtung weisen. Die so gebildeten Messer sind an einem Messerbalken quer zur Arbeitsrichtung hin- und herbewegend geführt. Die Schneiden der Messerklingen wirken hierbei mit am Messerbalken befestigten Mähfingern zusammen, wobei die Mähfinger Gegenschneiden in Form eines Klingenspalts bilden. Hierbei sind die Schneidenbereiche der Messerklingen winklig zur Arbeitsrichtung ausgerichtet und die Gegenschneiden der Mähfinger annähernd parallel zur Arbeitsrichtung, so dass das Erntegut in den Schneidbereich zwischen den Messerklingen und den Mähfingern eintauchen kann und durch die Hin- und Herbewegung des Mähmessers abgeschnitten wird. Eine alternative Möglichkeit besteht in dem Einsatz als Doppelmesser mit zwei gegenläufigen Mähmessern, bzw. einem feststehenden und einem bewegten Mähmesser ohne Mähfinger. Eine Stärke der Messerklinge ist so auf das lichte Maß des Klingenspalts angepasst, dass ein gewisser Abstand zwischen der Messerklinge und der jeweiligen Gegenschneide vorhanden ist, da das lichte Maß des Klingenspalts einer Toleranz unterliegt und die Messerklinge im Betrieb durch einwirkende Kräfte des Ernteguts gebogen wird. Andererseits darf der Abstand zwischen der Messerklinge und der jeweiligen Gegenschneide nicht zu groß sein, da dann Erntegut in den Klingenspalt eingezogen werden kann und nicht geschnitten wird. Der Materialeinsatz zur Herstellung von Messerklingen entsprechender Dicke ist vergleichsweise hoch. Dementsprechend sind mit den Messerklingen erhebliche Massen durch den Messerantrieb hin und her zu bewegen.

Eine Aufgabe der vorliegenden Erfindung besteht darin, eine massenreduzierte Messerklinge bereitzustellen, bei der die notwendige Stabilität dennoch gewährleistet ist.

Die Aufgabe wird durch eine Messerklinge nach Anspruch 1 und durch ein Fertigungsverfahren zur Herstellung der Messerklinge nach Anspruch 13 gelöst. In den Unteransprüchen sind jeweils vorteilhafte Ausführungsformen und bevorzugte Weiterbildungen angegeben.

Die erfindungsgemäße Messerklinge für ein Mähmesser einer landwirtschaftlichen Erntemaschine weist eine Klingenoberseite und einer Klingenunterseite auf, wobei eine Oberfläche der Klingenunterseite aus einer in einer Ebene angeordneten Planfläche und einem oberhalb der Ebene verlaufenden Aussparungsbereich zusammengesetzt ist. Eine Höhe der Messerklinge entspricht einem maximalen Abstand zwischen der Klingenoberseite und der Planfläche in einer Normalenrichtung zu der Ebene, wobei eine Materialstärke der Messerklinge einem Abstand zwischen der Klingenoberseite und der Klingenunterseite entspricht. Die Materialstärke der Messerklinge ist erfindungsgemäß zumindest bereichsweise geringer als die Höhe der Messerklinge.

Ein Bereich, in dem die Materialstärke geringer ist, als die Höhe, umfasst vorzugsweise mindestens eine Hälfte der Oberfläche der Klingenunterseite, besonders bevorzugt 90 Prozent der Oberfläche der Klingenunterseite. Insbesondere bevorzugt ist die Materialstärke in jedem Bereich der Messerklinge geringer als die Höhe.

Bevorzugt ist an mindestens einem Randbereich der Messerklinge eine Schnittkante ausgebildet ist, wobei die Oberfläche der Klingenunterseite mindestens in dem Randbereich eine Teilfläche der Planfläche aufweist. Gemäß einer bevorzugten Ausführungsform ist an der Oberfläche der Klingenunterseite außerhalb der Teilfläche mindestens eine Verschleißmarke zur Bestimmung eines Verschleißes an der Schnittkante angeordnet, wobei die Verschleißmarke eine in Normalenrichtung zwischen der Planfläche und dem Aussparungsbereich liegende Höhe markiert. Die Verschleißmarke zeigt an, wann der Verschleiß an der Schnittkante so groß ist, dass diese nicht mehr in der Planfläche liegt, sondern zwischen der Planfläche und dem Aussparungsbereich. Die Verschleißmarke ist bevorzugt zwischen der Planfläche und dem Aussparungsbereich angeordnet und kann beispielsweise in Form einer Einprägung gestaltet sein. Alternativ kann die Verschleißmarke auch durch den Aussparungsbereich selbst gebildet sein, das heißt, der Verschleiß wird dadurch erkennbar, dass die Schnittkante innerhalb des Aussparungsbereichs liegt.

Eine weitere Teilfläche der Planfläche der Oberfläche der Klingenunterseite ist bevorzugt um die Ausnehmung herum angeordnet. An einer Hinterkante der Messerklinge sind bevorzugt an der Oberfläche der Klingenunterseite eine Mehrzahl von weiteren Teilflächen der Planfläche angeordnet. Die Teilflächen an der Hinterkante sind insbesondere durch den Aussparungsbereich voneinander getrennt.

Bevorzugt ist mindestens eine Befestigungsausnehmung vorgesehen, wobei an der Oberfläche der Klingenunterseite eine weitere Teilfläche der Planfläche um die Befestigungsausnehmung herum angeordnet ist. Die Klingenoberseite weist bevorzugt eine die Befestigungsausnehmung umfangende Einprägung auf, wobei die Einprägung einem Befestigungsmittel entsprechend geformt ist.

Bei der erfindungsgemäßen Messerklinge handelt es sich bevorzugt um eine sogenannte Dreiecksklinge, die beispielsweise an Mähwerken von Mähdreschern eingesetzt werden. Ebenfalls bevorzugt ist die erfindungsgemäßen Messerklinge alternativ als Rotorklinge oder als Häckslerklinge augebildet, die eine rechteckige Grundform aufweisen.

Ein weiterer Erfindungsgegenstand betrifft ein Verfahren zur Herstellung der beschriebenen erfindungsgemäßen Messerklinge, wobei mindestens ein Formgebungsschritt vorgesehen ist, bei dem die Messerklinge derart geformt wird, dass die Materialstärke der Messerklinge zumindest bereichsweise geringer ist, als die Höhe der Messerklinge. Bevorzugt wird bei dem Formgebungsschritt ein urformendes oder ein umformendes Verfahren angewendet. Weiterhin bevorzugt ist mindestens ein Weiterbearbeitungsschritt vorgesehen ist, bei dem an der Oberfläche der Klingenunterseite die Planfläche mittels mindestens eines spanenden Fertigungsverfahrens bearbeitet wird.

Die Erfindung wird nachfolgend anhand eines bevorzugten Ausführungsbeispiels mit Bezugnahme auf die beiliegenden Zeichnungen näher erläutert. Die Erläuterungen betreffen die erfindungsgemäße Messerklinge ebenso, wie das erfindungsgemäße Fertigungsverfahren zur Herstellung der Messerklinge. Die Ausführungen sind lediglich beispielhaft und schränken den allgemeinen Erfindungsgedanken nicht ein.

Es zeigen
Figuren 1 bis 5 ein erstes Ausführungsbeispiel einer erfindungsgemäßen Messerklinge in verschiedenen Ansichten;
Figuren 6 bis 10 ein zweites Ausführungsbeispiel einer erfindungsgemäßen Messerklinge in verschiedenen Ansichten; und
Figuren 11 bis 15 ein drittes Ausführungsbeispiel einer erfindungsgemäßen Messerklinge in verschiedenen Ansichten.

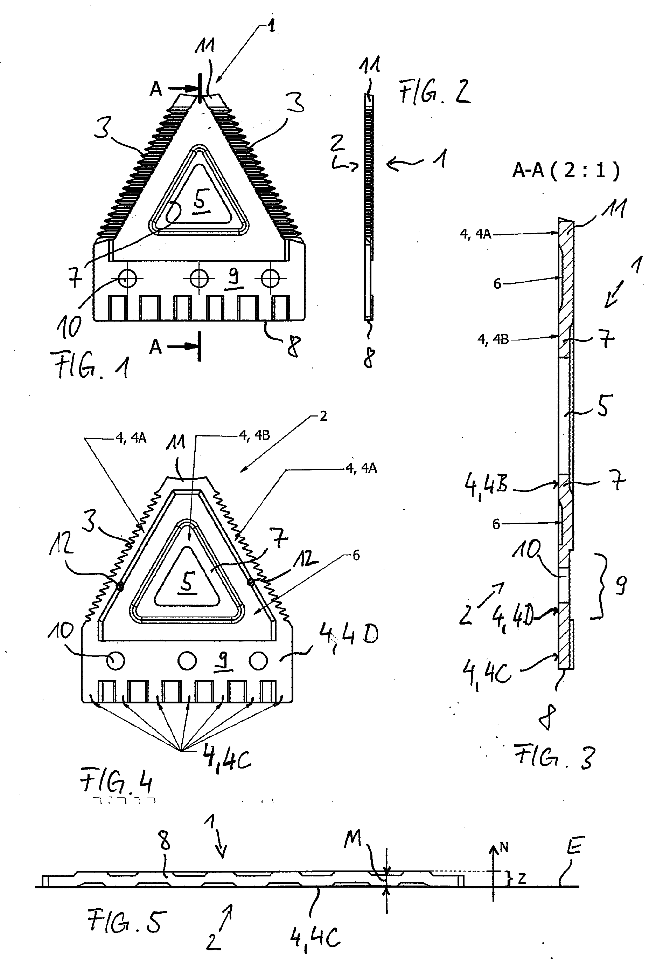

In der Figur 1 ist die erfindungsgemäße Messerklinge gemäß einer ersten Ausführungsform in einer Ansicht auf eine Klingenoberseite 1 dargestellt. Die Messerklinge weißt zwei Schneidebereiche 3 auf, in denen der Rand der Messerklinge mit einer Schneide zum Schneiden von Erntegut versehen ist. In einem vorderen Bereich der Messerklinge, der im Folgenden als Messerspitze 11 bezeichnet wird, unabhängig davon, ob dieser tatsächlich spitz, oder wie im Ausführungsbeispiel, eher stumpf geformt ist, laufen die Schneidbereiche 3 annähernd zusammen und bilden so die in etwa dreieckförmige Gestalt des vorderen Teils der Messerklinge. Dieser Teil der Messerklinge weist auch eine etwa dreieckförmige Ausnehmung 5 mit einem umlaufenden Randbereich 7 auf. Die gezeigte Messerklinge wird auch als Dreiecksklinge bezeichnet. Es könnte aber ebenso eine Rotorklinge oder eine Häckslerklinge erfindungsgemäß gestaltet sein, die eine eher rechteckige Grundform aufweist. In einer Fahrt- und Arbeitsrichtung einer landwirtschaftlichen Erntemaschine mit einem Mähmesser, welches die dargestellte Messerklinge umfasst, wäre die Messerspitze 11 vorn und eine Hinterkante 8 der Messerklinge hinten. Sofern im Folgenden die Begriffe vorn und hinten verwendet werden, beziehen diese sich auf die Arbeitsrichtung der Erntemaschine. Die Bewegungsrichtung des Mähmessers mit der Messerklinge zum Schneiden des Ernteguts relativ zu der Erntemaschine ist quer zur Arbeitsrichtung, insbesondere in etwa rechtwinklig dazu, in Einbaulage horizontal, was der Zeichenebene in Figur 1 entspricht. An den vorderen, in der Ansicht etwa dreieckförmigen Teil der Messerklinge schließt sich ein in der Ansicht etwa rechteckförmiger Befestigungsbereich 9 an, welcher mit der Hinterkante 8 abschließt. Der Befestigungsbereich weist Befestigungsmittel 10 zum Festlegen der Messerklinge auf, welche in der Regel an einem Messerbalken (nicht dargestellt) befestigt wird, um mit einer Vielzahl weiterer Messerklingen das Mähmesser zu bilden. Als Befestigungsmittel sind in dem Ausführungsbeispiel Bohrungen 10 vorgesehen, die Beispielsweise zur Herstellung von Schraubverbindungen dienen können.

In der Figur 2 ist die Messerklinge aus Figur 1 in einer um 90 Grad gedrehten Ansicht von der Seite dargestellt, in der die Lage der Messerspitze 11 vorn und der Hinterkante 8 hinten, sowie die insgesamt flache Form der Messerklinge mit der Oberseite 1 und einer Unterseite 2 erkennbar sind.

In der Figur 3 ist ein Schnitt entlang der Linie A-A aus Figur 1 in zweifacher Vergrößerung dargestellt. Die Figur 4 zeigt eine Ansicht auf die Unterseite 2 der Messerklinge und die Figur 5 zeigt wiederum eine gegenüber der Figur 1 um 90 Grad gedrehte Ansicht auf die Hinterkante 8 in einer vergrößerten Darstellung.

Nachfolgend wird auf die Figuren 1 bis 5 gemeinsam Bezug genommen. Die Ausführungsform der erfindungsgemäßen Messerklinge für ein Mähmesser einer landwirtschaftlichen Erntemaschine weist eine Oberfläche der Klingenunterseite 2 auf, welche aus einer in einer Ebene E (vgl. Figur 5) angeordneten Planfläche 4 und einem oberhalb der Ebene verlaufenden Aussparungsbereich 6 zusammengesetzt ist, wie in den Figuren 3 und 4 zu erkennen ist. Eine Höhe Z der Messerklinge entspricht einem maximalen Abstand zwischen der Klingenoberseite 1 und der Planfläche 4 in einer Normalenrichtung N zu der Ebene E, wie in Figur 5 dargestellt. Eine Materialstärke M der Messerklinge entspricht wiederum einem Abstand zwischen der Klingenoberseite 1 und der Klingenunterseite 2, welcher sinnvollerweise ebenfalls in Normalenrichtung N gemessen wird. Die Materialstärke M der Messerklinge ist dabei erfindungsgemäß zumindest bereichsweise geringer, als die Höhe Z der Messerklinge, wie beispielhaft anhand einer Messstelle in der Figur 5 dargestellt. Grundsätzlich kann die Materialstärke der Messeklinge in bestimmten Bereichen auch größer sein, nämlich bis maximal zu der Höhe Z der Messerklinge. Ein solcher Bereich ist in der Figur 3 erkennbar, nahe der Messerspitze 11, beispielsweise. Es wäre jedoch auch denkbar, dass die Materialstärke M in jedem Bereich der Messerklinge geringer ist, als deren Höhe Z. Bevorzugt umfasst ein Bereich, in dem die Materialstärke M geringer ist, als die Höhe Z mindestens eine Hälfte der Oberfläche der Klingenunterseite 2.

Die Planfläche 4 ist bevorzugt ein Fläche, deren Planarität, auch als Planizität bezeichnet, größer ist als bei dem Aussparungsbereich 6. Beliebige Punkte auf der Planfläche 4 sind also räumlich in der Ebene E angeordnet. Der Aussparungsbereich 6 bildet ebenfalls eine Fläche, die jedoch uneben, also gekrümmt oder gewölbt sein kann, so dass Punkte auf der Fläche des Aussparungsbereichs 6 räumlich in unterschiedlichen Ebenen angeordnet sind. Als Planarität wird auch einen gewisse Oberflächengüte bezeichnet die sich auf eine Oberflächenrauigkeit bezieht. Der Begriff Planfläche ist jedoch nicht als Beanspruchung einer bestimmten Oberflächengüte zu verstehen. Die Planfläche 4 kann natürlich mittels mindestens eines spanenden Fertigungsverfahrens bearbeitet sein, um eine gewisse Oberflächenrauigkeit zu erhalten. Der Fachmann erkennt jedoch, dass die Planfläche 4 im Sinne der Erfindung auch ohne Bearbeitung der Oberfläche, bereits durch ein urformendes Verfahren, wie Gießen oder Sintern, herstellbar ist. An die Oberfläche der Klingenoberseite 1 sind im Sinne der Erfindung keine Bedingungen gestellt. Der Fachmann erkennt, dass diese ebenfalls flach ausgeführt sein wird, da die Höhe Z der Messerklinge einem Klingenspalt angepasst sein muss, mit dem die Messerklinge zusammenwirkt. Die Bezeichnungen Klingenoberseite 1 und Klingenunterseite 2 sind willkürlich gewählt und entsprechen der überwiegend üblichen Einbaulage der Messerklinge. Die erfindungsgemäße Messerklinge kann ebenso in einer Einbaulage mit der Klingenunterseite nach oben eingebaut sein, je nachdem, wie das Schneidwerk der Erntemaschine aufgebaut ist.

Die Planfläche 4 umfasst eine Mehrzahl an Teilflächen. In den Schneidenbereichen 3 der Messerklinge weist die Oberfläche der Klingenunterseite 2 eine Teilfläche 4A der Planfläche 4 auf. An der Oberfläche der Klingenunterseite 2 sind bevorzugt unmittelbar an der in den Schneidenbereichen 3 angeordneten Teilfläche 4A Verschleißmarken 12 zur Bestimmung eines Verschleißes an der Schnittkante angeordnet. Die Verschleißmarken 12 sind in dem Aussparungsbereich 6 direkt an der Grenze zu der Planfläche 4 angeordnet, wobei die Verschleißmarken 12 eine in der Normalenrichtung N zwischen der Planfläche 4 und dem umgebenden Aussparungsbereich 6 liegende Höhe markieren. Sobald der Verschleiß eine der Verschleißmarken 12 erreicht hat, kann beispielsweise ein Austausch des Messers vorgenommen werden. Die Verschleißmarken 12 können beispielsweise in Form einer Einprägung oder Abschrägung vorgenommen werden. In einer abgewandelten alternativen Ausführungsform kann die Verschleißmarke 12 auch durch die Planfläche 6 gebildet sein. In diesem Fall kann auf eine Einprägung oder Abschrägung verzichtet werden.

Eine weitere Teilfläche 4B der Planfläche 4 der Oberfläche der Klingenunterseite 2 ist um die Ausnehmung 5 herum, in dem Randbereich 7 der Ausnehmung 5 angeordnet. An der Hinterkante 8 der Messerklinge sind an der Oberfläche der Klingenunterseite 2 eine Mehrzahl von Teilflächen 4C der Planfläche 4 angeordnet. Schließlich ist noch eine Teilfläche 4D der Planfläche 4 in dem Befestigungsbereich 9 angeordnet. Die Teilflächen 4A, 4C, 4D der Planfläche in den Schneidenbereichen 3, im Befestigungsbereich 9 und an der Hinterkante 8 der Messerklinge sind im Ausführungsbeispiel zusammenhängend, während die Teilfläche 4B der Planfläche 4 in dem Randbereich 7 der Ausnehmung 5 durch den Aussparungsbereich 6 von den anderen Teilflächen 4A, 4C, 4D getrennt ist. Die einzelnen Teilflächen 4C an der Hinterkante 8 sind ebenfalls jeweils durch den Aussparungsbereich 6 voneinander getrennt und lediglich über die Teilfläche 4D der Planfläche 4 im Befestigungsbereich 9 verbunden. Die Teilfläche 4D der Planfläche 4 im Befestigungsbereich 9 ist um die Befestigungsbohrungen 10 herum angeordnet.

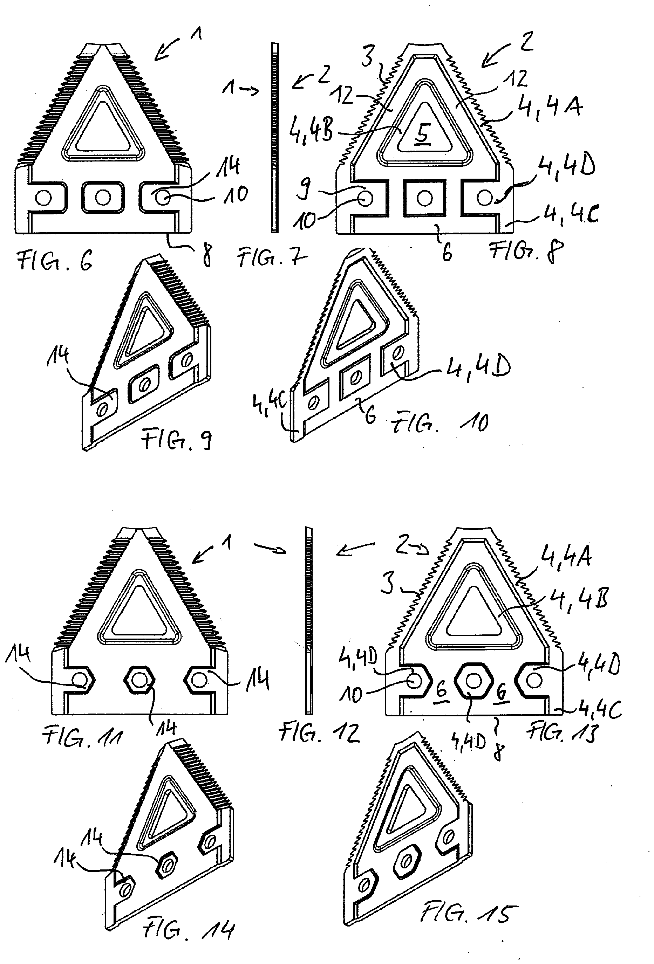

Die Figuren 6 bis 10 zeigen ein zweites Ausführungsbeispiel der erfindungsgemäßen Messerklinge in verschiedenen Ansichten und werden im Folgenden gemeinsam beschrieben. Die wesentlichen Merkmale entsprechen der Ausführungsform gemäß den Figuren 1 bis 5, weshalb gleiche Bezugszeichen gleiche Teile benennen und der Übersichtlichkeit halber teilweise weggelassen wurden und zur Vermeidung von Wiederholungen nicht erneut im Detail beschrieben werden.

Die Ausführungsform der erfindungsgemäßen Messerklinge gemäß der Figuren 6 bis 10 unterscheidet sich im Wesentlichen durch die Gestaltung der Hinterkante 8 und des Befestigungsbereichs 9 der Messerklinge. Wie insbesondere in Figur 8 erkennbar ist, sind nur zwei Teilflächen 4C der Planfläche 4 an der Hinterkante 8 gebildet, welche durch einen längeren Abschnitt des Aussparungsbereichs 6 getrennt sind. Die Teilfläche 4D der Planfläche 4 im Befestigungsbereich 9 ist in dem Ausführungsbeispiel nicht zusammenhängend, sondern besteht aus drei einzelnen Teilfläche 4D, welche jeweils um die Befestigungsbohrungen 10 herum angeordnet sind. Auf der Klingenoberseite 1 befinden sich den Teilfläche 4D der Planfläche 4 im Befestigungsbereich 9 entsprechende rechteckförmige Vertiefungen 14, die dementsprechend ebenfalls um die Befestigungsbohrungen 10 herum angeordnet sind. Diese erleichtern vorzugsweise das Befestigen der Messerklinge mit Schraubbolzen, da ein Mehrkant-Schraubkopf in der Vertiefung 14 gehindert wird, sich zu drehen. Die Verschleißmarke 12 ist bei der vorliegenden Ausführungsform innerhalb des Aussparungsbereichs 6 angeordnet bzw. durch diesen gebildet.

Die Figuren 11 bis 15 zeigen ein drittes Ausführungsbeispiel der erfindungsgemäßen Messerklinge in verschiedenen Ansichten und werden im Folgenden gemeinsam beschrieben. Die wesentlichen Merkmale entsprechen der Ausführungsform gemäß den Figuren 1 bis 5, weshalb gleiche Bezugszeichen gleiche Teile benennen und der Übersichtlichkeit halber teilweise weggelassen wurden und zur Vermeidung von Wiederholungen nicht erneut im Detail beschrieben werden. Die Ausführungsform der erfindungsgemäßen Messerklinge gemäß der Figuren 11 bis 15 entspricht in der Gestaltung der Hinterkante 8 dem zweiten Ausführungsbeispiel, so dass hierauf nicht weiter eingegangen wird.

Die hier ebenfalls vereinzelten drei Teilflächen 4D der Planfläche 4 im Befestigungsbereich 9 sind, wie gehabt, jeweils um die Befestigungsbohrungen 10 herum angeordnet. Auf der Klingenoberseite 1 befinden sich den Teilfläche 4D der Planfläche 4 im Befestigungsbereich 9 entsprechend, die Vertiefungen 14, ebenfalls um die Befestigungsbohrungen 10 herum angeordnet. Die Vertiefungen 14 sind in dem Ausführungsbeispiel einem gängigen Mehrkant-Schraubenkopf entsprechend sechseckig geformt. Bei dem Befestigen der Messerklinge mit Schraubbolzen mit einem Sechskant-Schraubkopf kann dieser sich in der Vertiefung 14 nicht mitdrehen.

### Bezugszeichenliste

- 1: Klingenoberseite
- 2: Klingenunterseite
- 3: Schneidenbereich
- 4: Planfläche
- 4A: Teilflächen der Planfläche in einem Schneidenbereich
- 4B: Teilflächen der Planfläche in einem Randbereich der Ausnehmung
- 4C: Teilflächen der Planfläche an einer Hinterkante der Messerklinge
- 4D: Teilflächen der Planfläche in einem Befestigungsbereich
- 5: Ausnehmung
- 6: Aussparungsbereich
- 7: Randbereich der Ausnehmung
- 8: Hinterkante der Messerklinge
- 9: Befestigungsbereich
- 10: Befestigungsausnehmung, Bohrung
- 11: Messerspitze
- 12: Verschleißmarken
- 14: Vertiefung
- E: Ebene
- N: Normalenrichtung
- Z: Höhe der Messerklinge

## Patentansprüche

1. Messerklinge für ein Mähmesser einer landwirtschaftlichen Erntemaschine, mit einer Klingenoberseite (1) und einer Klingenunterseite (2),
wobei eine Oberfläche der Klingenunterseite aus einer in einer Ebene (E) angeordneten Planfläche (4) und einem oberhalb der Ebene verlaufenden Aussparungsbereich (6) zusammengesetzt ist,
wobei eine Höhe der Messerklinge einem maximalen Abstand (Z) zwischen der Klingenoberseite und der Planfläche in einer Normalenrichtung (N) zu der Ebene entspricht
wobei eine Materialstärke der Messerklinge einem Abstand zwischen der Klingenoberseite und der Klingenunterseite entspricht,
und wobei die Materialstärke der Messerklinge zumindest bereichsweise geringer ist, als die Höhe der Messerklinge.

2. Messerklinge nach Anspruch 1, **dadurch gekennzeichnet, dass** ein Bereich, in dem die Materialstärke geringer ist, als die Höhe, mindestens eine Hälfte der Oberfläche der Klingenunterseite (2) umfasst.

3. Messerklinge nach einem der vorangehenden Ansprüche, **dadurch gekennzeichnet, dass** die Materialstärke in jedem Bereich der Messerklinge geringer ist, als die Höhe.

4. Messerklinge nach einem der vorangehenden Ansprüche, **dadurch gekennzeichnet, dass** die Höhe der Messeklinge einer lichten Weite eines mit dem Mähmesser zusammenwirkenden Messerspalts angepasst ist.

5. Messerklinge nach einem der vorangehenden Ansprüche, **dadurch gekennzeichnet, dass** an mindestens einem Randbereich der Messerklinge eine Schnittkante ausgebildet ist, wobei die Oberfläche der Klingenunterseite mindestens in dem Randbereich eine Teilfläche (4A) der Planfläche (4) aufweist.

6. Messerklinge nach Anspruch 5, **dadurch gekennzeichnet, dass** an der Oberfläche der Klingenunterseite außerhalb der Teilfläche (4A) mindestens eine Verschleißmarke (12) zur Bestimmung eines Verschleißes an der Schnittkante angeordnet ist, wobei die Verschleißmarke eine in Normalenrichtung (N) zwischen der Planfläche (4) und dem Aussparungsbereich (6) liegende Höhe oder eine innerhalb des Aussparungsbereichs (6) liegende Höhe markiert.

7. Messerklinge nach einem der vorangehenden Ansprüche, **dadurch gekennzeichnet, dass** die Messerklinge eine zentrale Ausnehmung aufweist, wobei eine Teilfläche (4B) der Planfläche (4) der Oberfläche der Klingenunterseite um die Ausnehmung herum angeordnet ist.

8. Messerklinge nach einem der vorangehenden Ansprüche, **dadurch gekennzeichnet, dass** an einer Hinterkante der Messerklinge an der Oberfläche der Klingenunterseite eine Mehrzahl von Teilflächen (4C) der Planfläche (4) angeordnet sind.

9. Messerklinge nach Anspruch 8, **dadurch gekennzeichnet, dass** die Teilflächen (4C) an der Hinterkante durch den Aussparungsbereich (6) voneinander getrennt sind.

10. Messerklinge nach einem der vorangehenden Ansprüche, **dadurch gekennzeichnet, dass** mindestens eine Befestigungsausnehmung (10) vorgesehen ist, wobei an der Oberfläche der Klingenunterseite eine Teilfläche (4D) der Planfläche (4) um die Befestigungsausnehmung herum angeordnet ist.

11. Messerklinge nach Anspruch 10, **dadurch gekennzeichnet, dass** die Klingenoberseite (1) eine die Befestigungsausnehmung (10) umfangende Einprägung aufweist, wobei die Einprägung einem Befestigungsmittel entsprechend geformt ist.

12. Messerklinge nach einem der vorangehenden Ansprüche, **dadurch gekennzeichnet, dass** die Messerklinge aus einem flächigen Material gefertigt ist, wobei das flächige Material vor einer Bearbeitung eine gegenüber der Höhe geringere Stärke aufweist.

13. Verfahren zur Herstellung einer Messerklinge nach einem der vorangehenden Ansprüche,
**dadurch gekennzeichnet,**
**dass** mindestens ein Formgebungsschritt vorgesehen ist, bei dem die Messerklinge derart geformt wird, dass die Materialstärke der Messerklinge zumindest bereichsweise geringer ist, als die Höhe der Messerklinge.

14. Verfahren nach Anspruch 13, **dadurch gekennzeichnet, dass** bei dem Formgebungsschritt ein urformendes oder ein umformendes Verfahren angewendet wird.

15. Verfahren nach einem der Ansprüche 13 oder 14, **dadurch gekennzeichnet, dass** mindestens ein Weiterbearbeitungsschritt vorgesehen ist, bei dem an der Oberfläche der Klingenunterseite die Planfläche (4) mittels mindestens eines spanenden Fertigungsverfahrens bearbeitet wird.
